# FASCICULE DE BREVET EUROPEEN

(11) **EP 1 576 999 B1**
(45) Date de publication et mention de la délivrance du brevet: **07.05.2008**
(21) Numéro de dépôt: 05356042.1
(22) Date de dépôt: 04.03.2005
(51) Int. Cl.: B01D 53/56, B01D 53/86, B01D 53/96, F23J 15/02

(54) **Dispositif modulaire et intégré de filtration et de dénitrification catalytique de fumées, installation d'épuration comprenant un tel dispositif et leurs procédés de mise en oeuvre**
Modulare und integrierte Vorrichtung zur Filtration und katalytischen Entstickung von Rauchgasen, Anlage enthaltend eine derartige Vorrichtung und Verfahren zu ihrer Verwendung
Modular and integrated device for the filtration and the catalytic denitrification of fumes, plant comprising such a device and methods for making use of them

(30) Priorité: 05.03.2004 FR 0402355
(43) Date de publication de la demande: 21.09.2005
(73) Titulaire: LAB SA, 69006 Lyon (FR)
(72) Inventeur: Tabaries, Franck, 83190 Ollioules (FR); Siret, Bernard, 69008 Lyon (FR); Costa, Stephano, 16154 Genova (IT); Blanc, Dominique, 69007 Lyon (FR)
(74) Mandataire: Schouller, Jean-Philippe

(56) Documents cités:
- EP-A- 0 600 440

## Description

La présente invention concerne un dispositif intégré de filtration et de dénitrification catalytique de fumées, un procédé de mise en oeuvre de ce dispositif, une installation d'épuration de fumées comprenant un tel dispositif, ainsi qu'un procédé de mise en oeuvre de cette installation.

L'invention vise plus particulièrement l'épuration de fumées contenant des oxydes de soufre et d'azote, ainsi que du chlorure d'hydrogène. Dans cette optique, il s'agit notamment de fumées d'incinération.

Lors de l'incinération de déchets ménagés ou de boues de station d'épuration, par exemple, les fumées issues de la combustion contiennent une quantité appréciable d'éléments nocifs, tels que le chlorure d'hydrogène HCl, le dioxyde de soufre SO₂, ainsi que des oxydes d'azote. Ces fumées sont également chargées en poussières, en métaux lourds ainsi qu'en composants organiques, tels que des furanes.

On conçoit donc que, avant de pouvoir être rejetées dans l'atmosphère, les fumées résultant de la combustion évoquée ci-dessus doivent être épurées. A cet effet, on connaît différents procédés susceptibles d'être utilisés, qui sont proposés à l'échelle industrielle.

Il est tout d'abord à noter que, pour des raisons technologiques, il est habituel d'effectuer les opérations de dénitrification, encore dénommées deNOx, de manière séparée de celles d'élimination des autres polluants, tels que le HCl, le SO₂ et les métaux lourds.

En ce qui concerne la dénitrification, plusieurs technologies sont disponibles, parmi lesquelles la dénitrification catalytique, dite SCR, occupe une place de choix, non seulement du fait de ses performances de dénitrification, mais également pour ses capacités à traiter également les dioxines et les furanes. Dans cette technologie, les fumées à épurer passent à travers un réacteur catalytique, qui réduit les oxydes d'azote par réaction avec de l'ammoniac, ou tout autre réactif équivalent.

Une contrainte de ce procédé catalytique réside dans le fait que le réactif habituellement utilisé a tendance à réagir avec les oxydes de soufre encore présents, ce qui conduit au dépôt de sels comme le sulfite ou le bisulfite d'ammonium, qui ont tendance à entraver l'activité du catalyseur. A cet égard, il est à noter que d'autres types de sels peuvent également se déposer, lors de la mise en oeuvre de cette dénitrification catalytique. Enfin, les fumées traitées peuvent également comporter des poisons, tels que par exemple l'arsenic, qui conduisent à la désactivation du catalyseur.

Il est envisageable de placer l'unité de dénitrification catalytique, de type SCR, aussi bien en amont qu'en aval des autres unités de l'installation. Ces autres unités, qui sont par exemple des laveurs ou des filtres, ont pour fonction d'épurer les fumées des autres composants nocifs qu'elles contiennent initialement, comme les poussières et les oxydes de soufre.

On choisit souvent de placer cette unité de dénitrification en aval des autres unités précitées. Deux options s'offrent alors, à savoir travailler à une température plutôt élevée, par exemple comprise entre 240 et 350°C, soit opérer à une température plus basse, comprise notamment entre 170 et 240°C.

Lorsque la température de dénitrification est relativement élevée, cette option apporte une sécurité supplémentaire à l'égard de l'empoisonnement ou du dépôt de sels. Cependant, il est alors nécessaire de remonter la température des fumées à partir de celle où opère le laveur, par exemple voisine de 65°C, ou encore le filtre à manches, par exemple comprise entre 120 et 200°C. Ceci implique donc l'installation de brûleurs et/ou d'échangeurs récupérateurs de chaleur, qui sont coûteux et qui sont eux-mêmes sujets à des encrassements par dépôt de sels.

En revanche, le fait d'opérer à plus basse température permet d'économiser les dispositifs récupérateurs de chaleur, évoqués ci-dessus, ce qui implique des investissements moindres. Cependant, cette alternative s'accompagne de l'utilisation d'un volume supérieur de catalyseur, ainsi que d'une attention particulière vis-à-vis de la protection de ce catalyseur à l'égard des sels parasites et des poisons.

Il est également envisageable de placer l'unité de dénitrification SCR en amont des filtres ou des laveurs, à un endroit où la température des fumées est encore élevée. Ceci permet donc d'économiser les dispositifs de récupération de chaleur, qui sont nécessaires dans la variante aval à haute température, décrite ci-dessus.

Cependant, dans ce cas, les fumées traitées sont susceptibles de contenir une quantité de poussières importante, ce qui oblige à faire appel à des catalyseurs à canaux plus ouverts, dont la surface spécifique est moindre, en interdisant ainsi quasiment toute utilisation de catalyseur en granulés. En outre, la teneur en oxydes de soufres SO₂ et SO₃ dans les fumées, qui est encore importante, est susceptible d'aggraver le risque de dépôt de sels sur le catalyseur.

Enfin, il convient de souligner que, quelles que soient la disposition et la température de cette unité de dénitrification, le catalyseur est sujet à une perte plus ou moins rapide de son activité. Il y a donc lieu de mettre en oeuvre des régénérations périodiques de ce catalyseur, par chauffage, qui impliquent différentes contraintes.

Lors de ces régénérations, des quantités appréciables de polluants sont rejetées, ce qui est dû au fait que le but de cette opération est de désorber les sels et les poisons du catalyseur. De ce fait, des quantités importantes de ces produits se trouvent rejetées avec les gaz ayant servi à la régénération. Ces rejets peuvent se révéler totalement inacceptables, tant en termes de durée que de concentration, de sorte qu'ils ne peuvent être tolérés que de façon tout à fait exceptionnelle.

Ces régénérations impliquent également de procéder à un fonctionnement dégradé de l'usine produisant les fumées brutes, puisque celles-ci ne peuvent pas être émises directement à l'atmosphère sans traitement. Cette opération de régénération présente par ailleurs une durée importante, pouvant dépasser 10 heures, ce qui implique un manque à gagner économique notable.

L'invention vise à remédier aux différents inconvénients de l'art antérieur évoqués ci-dessus.

A cet effet, elle a pour objet un dispositif modulaire et intégré de filtration et de dénitrification catalytique de fumées, comprenant un module de filtration et un module de dénitrification catalytique, dans lequel
le module de filtration comporte au moins une unité de filtration, dont chacune comprend une entrée de fumées à épurer préalablement, des moyens de filtration, tels que des manches de filtration, ainsi qu'une sortie des fumées préalablement épurées, ce module de filtration comportant également des moyens d'amenée des fumées à épurer préalablement, débouchant dans la ou chaque entrée, des moyens de mise en communication sélective entre ces moyens d'amenée et chaque entrée, des moyens d'évacuation des fumées préalablement épurées, débouchant dans chaque sortie, ainsi que des moyens de mise en communication sélective de chaque sortie avec ces moyens d'évacuation,
alors que le module de dénitrification comprend plusieurs unités de dénitrification, dont chacune comprend une première entrée de fumées à dénitrifier, des moyens de dénitrification catalytique, une première sortie des fumées dénitrifiées, une seconde entrée d'un flux de régénération des moyens de dénitrification catalytique, ainsi qu'une seconde sortie d'évacuation des produits de la régénération, ce module de dénitrification comprenant également des moyens d'amenée des fumées à dénitrifier, débouchant dans la ou chaque première entrée, qui sont mis en relation avec les moyens d'évacuation des fumées préalablement épurées et comprenant une arrivée d'un réactif de dénitrification, des moyens de mise en communication sélective entre ces moyens d'amenée et chaque entrée, des moyens d'évacuation des fumées dénitrifiées, débouchant dans chaque première sortie, des moyens de mise en communication sélective de chaque première sortie avec ces moyens d'évacuation, des moyens d'arrivée du flux de régénération, débouchant dans chaque seconde entrée, des moyens de mise en communication sélective entre ces moyens d'arrivée et chaque seconde entrée, des moyens d'évacuation des produits issus de la régénération, débouchant dans chaque seconde sortie, ainsi que des moyens de mise en communication sélective de chaque seconde sortie avec ces moyens d'évacuation,
de sorte qu'il est possible de régénérer au moins une unité de dénitrification, en isolant celle-ci par rapport aux moyens d'amenée des fumées à dénitrifier et aux moyens d'évacuation des fumées dénitrifiées, tout en mettant cette au moins une unité en communication à la fois avec les moyens d'arrivée du flux de régénération et avec les moyens d'évacuation des produits issus de la régénération, alors que les autres unités sont propres à se trouver dans une phase de dénitrification, par mise en communication de ces autres unités à la fois avec les moyens d'amenée des fumées à dénitrifier et avec les moyens d'évacuation des fumées dénitrifiées, tout en isolant ces autres unités par rapport aux moyens d'arrivée du flux de régénération et aux moyens d'évacuation des produits issus de la régénération.

Selon d'autres caractéristiques de l'invention :
- il est prévu plusieurs unités de filtration, qui sont disposées les unes derrière les autres ;
- les moyens d'amenée des fumées à épurer préalablement et les moyens d'évacuation des fumées préalablement épurées comprennent des première et seconde gaines, s'étendant le long d'un côté des différentes unités de filtration ;
- les différentes unités de dénitrification sont disposées les unes derrière les autres ;
- les moyens d'amenée des fumées à dénitrifier et les moyens d'évacuation des fumées dénitrifiées comprennent des troisième et quatrième gaines, s'étendant sur un des côtés des différentes unités de dénitrification ;
- le module de filtration et le module de dénitrification catalytique sont disposés côte à côte ;
- les première, deuxième, troisième et quatrième gaines sont disposées les unes au-dessous des autres, dans un volume intercalaire défini par le module de filtration et le module de dénitrification accolés ;
- de bas en haut, sont disposées respectivement la première gaine, la troisième gaine, la quatrième gaine et la deuxième gaine ;
- le module de filtration et le module de dénitrification catalytique sont disposés l'un derrière l'autre ;
- les moyens d'arrivée du flux de régénération et les moyens d'évacuation des produits issus de la régénération comprennent des cinquième et sixième gaines, s'étendant le long des unités de dénitrification, à l'opposé des troisième et quatrième gaines ;
- le nombre d'unités de filtration est compris entre 2 et 10, de préférence entre 4 et 8 ;
- le nombre d'unités de dénitrification catalytique est compris entre 2 et 12, de préférence entre 6 et 10 ;
- chaque unité de dénitrification est pourvue d'un dispositif de ramonage des moyens de dénitrification catalytique, ce dispositif étant situé au-dessus ou au-dessous de ces moyens de dénitrification, à une distance comprise entre 350 et 600 mm de ceux-ci ;
- chaque unité de filtration et chaque unité de dénitrification catalytique sont pourvues de trémies de collecte de solides, ainsi que de moyens d'évacuation des solides ainsi collectés ;
- le dispositif comprend également des moyens de manutention et de levage, qui sont placés au-dessus de ces unités.

L'invention a également pour objet un procédé de mise en oeuvre du dispositif tel que défini ci-dessus, comprenant les étapes suivantes :
- on alimente les moyens d'amenée des fumées à épurer préalablement, au moyen de fumées dont la température est comprise entre 140°C et 250°C, de préférence entre 180°C et 230°C ;
- on épure préalablement ces fumées au sein de la ou de chaque unité de filtration ;
- on mélange les fumées préalablement épurées à un réactif de dénitrification, choisi notamment dans la famille de l'ammoniac ou de ses solutions dans l'eau,
- on introduit les fumées à dénitrifier dans au moins certaines unités de dénitrification, tout en isolant ces unités par rapport aux moyens d'arrivée du flux de régénération et aux moyens d'évacuation des produits de la régénération ; et
- on régénère périodiquement au moins une autre unité de dénitrification, en y introduisant un flux de régénération dont la température est comprise entre 280 et 450°C, de préférence entre 300 et 350°C, tout en isolant cette au moins une autre unité par rapport aux moyens d'amenée des fumées à dénitrifier et aux moyens d'évacuation des fumées dénitrifiées.

L'invention a également pour objet une installation d'épuration de fumées comprenant un dispositif modulaire et intégré de filtration et de dénitrification catalytique tel que défini ci-dessus, ainsi qu'une ligne d'amenée des fumées à épurer, débouchant dans les moyens d'amenée des fumées à épurer préalablement, une ligne d'évacuation des fumées dénitrifiées, mise en communication avec les moyens d'évacuation des fumées dénitrifiées, une ligne d'arrivée d'un flux de régénération, débouchant dans les moyens d'arrivée du flux de régénération, ainsi qu'une ligne d'évacuation des produits issus de la régénération, mise en communication à la fois avec les moyens d'évacuation des produits issus de la régénération et avec la ligne d'amenée des fumées à épurer.

Selon d'autres caractéristiques de l'invention :
- la ligne d'arrivée du flux de régénération est pourvue d'un brûleur ;
- la ligne d'arrivée du flux de régénération est mise en communication avec la ligne d'évacuation des fumées dénitrifiées.

L'invention a enfin pour objet un procédé de mise en oeuvre de l'installation telle que définie ci-dessus dans lequel on alimente le flux de régénération, dans les moyens d'arrivée de ce flux de régénération, selon un débit compris entre 2 et 15 % du débit total des fumées dénitrifiées, et dans lequel on recycle l'ensemble des produits issus de la régénération en amont du dispositif modulaire et intégré de filtration et de dénitrification catalytique.

Selon une autre caractéristique de l'invention, on prélève directement le flux de régénération à partir des fumées dénitrifiées.

L'invention va être décrite ci-après, en référence aux dessins annexés, donnés uniquement à titre d'exemples non limitatifs, dans lesquels :
- la figure 1 est une vue schématique illustrant une installation d'épuration de fumées conforme à l'invention ;
- la figure 2 est une vue schématique, analogue à la figure 1, illustrant une variante de réalisation de l'installation d'épuration de fumées suivant l'invention ; et
- la figure 3 est une vue en perspective, illustrant partiellement un dispositif intégré de filtration et de dénitrification catalytique, appartenant à l'installation des figures précédentes.

Les fumées 1, issues d'un gaz de combustion fourni par une unité 101 telle qu'un incinérateur, circulent au sein d'une ligne 11. Elles sont refroidies au sein d'une unité 102, qui est par exemple une chaudière ou un économiseur, jusqu'à une température comprise entre 140 et 250°C.

Ces fumées 1 sont alimentées, après mélange avec une fraction recyclée 9 circulant dans une ligne 12 piquée sur cette ligne 11, dans un réacteur 103, qui est optionnel. Ce dernier, qui est destiné à promouvoir le contact entre un réactif de neutralisation et les fumées, est par exemple un réacteur ou un atomiseur.

Dans cette optique, le réactif de neutralisation est introduit, par exemple, au niveau du réacteur par la ligne L. A titre de variante, ce réactif peut être introduit directement dans un module de filtration, qui sera décrit dans ce qui suit, ou en amont de ce module dans le cas où le réacteur 103 n'est pas prévu. Ce dernier peut également être intégré directement dans le module de filtration.

On note 2 les fumées évacuées du réacteur 103, qui circulent dans l'extrémité aval de la ligne 11. Cette dernière débouche alors dans un dispositif intégré de filtration et de dénitrification catalytique, qui va être décrit en détail dans ce qui suit.

Ce dispositif, désigné dans son ensemble par la référence 100, possède un module de filtration de fumées 104, ainsi qu'un module de dénitrification catalytique 105, qui sont disposés côte à côte. Le module 104 est formé de différentes unités de filtration, notées 104a à 104h, qui sont disposées les unes derrière les autres. De façon avantageuse, le nombre de ces unités de filtration est compris entre 1 et 10, de préférence entre 4 et 8.

Le module 105 est formé de différentes unités de dénitrification catalytique, 105a à 105h, disposées les unes derrières les autres en regard des unités de filtration précitées. Le nombre de ces unités de dénitrification est compris entre 4 et 12, de préférence entre 6 et 10.

Chaque unité 104a à 104h est réalisée sous la forme d'un caisson, dont le corps 104₁ sensiblement parallélépipédique est prolongé par un fond 104₂, agencé à la manière d'une trémie. Cette dernière est pourvue de moyens classiques, non représentés, permettant d'extraire les solides issus de la filtration. De plus, chaque unité est pourvue de moyens de filtration, qui sont en l'occurrence des manches de filtration 104₃, de type connu en soi.

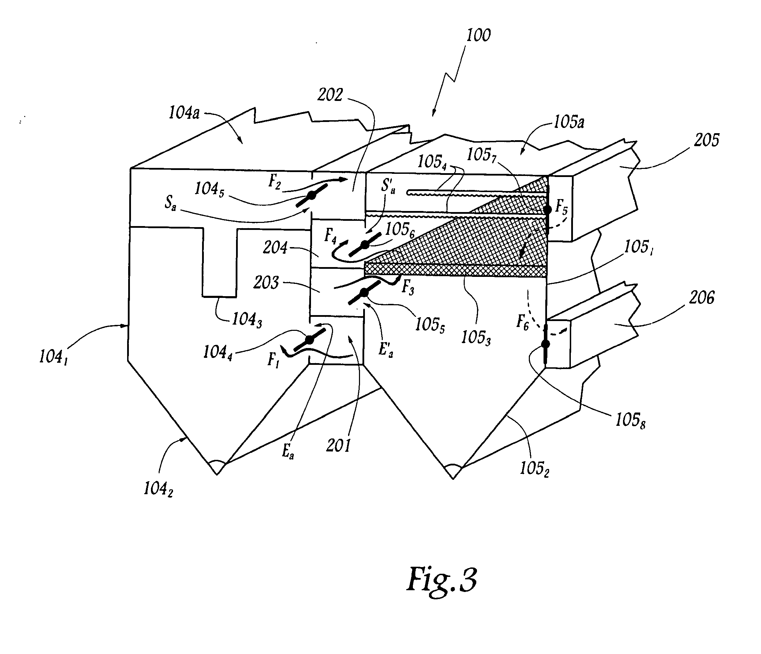

Du côté intérieur, à savoir en regard des unités 105a à 105h, chaque unité de filtration 104a à 104h possède une entrée, notée Ea à Eh, prévue en partie basse, ainsi qu'une sortie, notée Sa à Sh, prévue en partie haute. Ces différentes entrées et sorties peuvent être obturées, de façon sélective, par des registres correspondants, dont seuls deux sont illustrés sur la figure 3, où ils sont affectés des références 104₄ et 104₅.

Les différentes entrées Ea à Eh sont mises en communication avec une gaine 201, dans laquelle débouche l'extrémité aval de la ligne 11. Cette gaine s'étend le long des différentes unités de filtration, au sein d'un volume intercalaire noté I, qui est défini par les modules respectifs de filtration 104 et de dénitrification 105.

Il est prévu une seconde gaine 202, en partie haute, qui s'étend également dans le volume intercalaire I, de façon parallèle à la première gaine 201. Cette gaine 202, qui est mise en communication avec les différentes sorties Sa à Sh, est prolongée par une troisième gaine qui sera décrite plus en détail dans ce qui suit.

Chaque unité de dénitrification 105a à 105h est réalisée sous forme d'un caisson, comprenant un corps 105₁ sensiblement parallélépipédique, prolongé par un fond 105₂ agencé de la manière d'une trémie. Cette dernière est associée à des moyens non représentés, permettant d'évacuer de façon classique les solides collectés dans cette trémie.

Chaque caisson est par ailleurs muni d'un lit catalytique 105₃. Le catalyseur de type classique qui y est contenu peut être extrudé, en plaques, à canaux verticaux ou bien en granulés retenus entre des plaques perforées. Ce catalyseur est adapté pour la dénitrification catalytique, encore dénommée SCR, de type connu en soi.

De plus, chaque unité de dénitrification est pourvue de moyens de ramonage, représentés de façon tout-à-fait schématique, qui sont en l'occurrence des rampes 105₄ constituées de tuyaux perforés. Ces rampes 105₄ sont placées au-dessus du lit de catalyseur 105₃, à une distance comprise entre 350 et 600 mm de celui-ci. En variante, ces rampes peuvent être prévues au-dessous de ce lit 105₃.

Du côté intérieur, à savoir en regard d'une unité de filtration correspondante, chaque unité de dénitrification 105a à 105h comporte une première entrée, notée E'a à E'h, prévue en partie basse. Au-dessus de ces entrées sont ménagées des sorties correspondantes, qui sont notées S'a à S'h. Ces différentes entrées et sorties sont obturées de façon sélective par des registres, dont seuls deux sont représentés sur la figure 3, ou ils sont affectés des références 105₅ et 105₆.

Une troisième gaine 203 s'étend le long du côté intérieur des différentes unités de dénitrification 105a à 105h. Cette gaine 203, qui prolonge celle 202, est piquée dans son extrémité amont d'une conduite 13, dans laquelle circule un réactif de neutralisation 4, pouvant être de l'ammoniac ou une solution ammoniacale. Cette gaine 202 est mise en communication avec les différentes entrées E'a à E'h.

Il est par ailleurs prévu une quatrième gaine 204, mise en communication avec les différentes sorties S'a à S'h. Cette gaine 204 débouche, à son extrémité aval, dans une conduite notée 14.

Il est à souligner que les gaines 201 à 204 sont avantageusement de section transversale rectangulaire. De plus, elles sont avantageusement placées les unes sous les autres, à savoir dans l'ordre 201, 203, 204 et 202 de bas en haut.

Du côté extérieur des unités de dénitrification 105a à 105h s'étend une cinquième gaine, notée 205. Cette dernière, qui est mise en communication avec une ligne 15, qui sera décrite plus en détail dans ce qui suit, débouche dans des entrées supplémentaires notées E''a à E''h, qui sont ménagées en partie haute de ces unités.

Il est enfin prévu une sixième gaine, notée 206, qui s'étend le long de ces unités 105a à 105h en partie basse de ces dernières. Cette gaine 206, qui débouche à son extrémité aval dans la ligne 12 précitée, est mise en communication avec différentes sorties supplémentaires, notées S''a à S''h, ménagées sur le côté extérieur des différentes unités de régénération. Les différentes entrées et sorties supplémentaires, E" a à E''h et S''a à S" h, sont obturées de façon sélective par des registres correspondants, dont seuls deux 105₇ et 105₈ sont illustrés sur la figure 3.

Les fumées à traiter 2, circulant initialement dans la ligne 11, sont tout d'abord admises dans la gaine 201. Puis, elles pénètrent dans les différentes unités de filtration, au niveau des entrées Ea à Eh, ce qui est matérialisé par la flèche F₁ à la figure 3.

Ces fumées sont tout d'abord préalablement épurées au niveau des manches 104₃, à savoir qu'elles sont dépoussiérées et débarrassées de leurs polluants acides. Elles ressortent ensuite des unités de filtration, selon la flèche F₂ à la figure 3, par les sorties correspondantes Sa à Sh.

Ces fumées préalablement épurées, mais contenant encore des oxydes d'azote, sont collectées dans la gaine 202, puis sont mélangées au réactif de neutralisation 4. Elles circulent alors dans la gaine 203, puis pénètrent dans les unités de dénitrification correspondantes 105a à 105h. Ce mouvement des fumées, au travers des entrées E'a à E'h, est matérialisé par la flèche F₃ à la figure 3.

Les fumées sont alors dénitrifiées, au sein du lit catalytique 105₂, puis sont admises dans la conduite 204 selon la flèche F₄. Il est à noter que, pendant qu'une unité donnée de dénitrification est alimentée en fumées depuis la gaine 203, cette unité est totalement isolée par rapport aux deux dernières gaines 205 et 206.

Les fumées épurées 5, c'est-à-dire successivement épurées de manière préalable dans le module 104 puis dénitrifiées dans le module 105, sont alors reprises par l'intermédiaire d'un ventilateur de tirage 107, placé sur la ligne 14 qui est mise en communication avec la quatrième gaine 204. La majeure partie 10 des fumées épurées 5 est alors envoyée vers une cheminée non représentée, tandis qu'une fraction minoritaire, notée 6, s'écoule dans la ligne 15, évoquée ci-dessus, qui débouche dans la gaine 205.

Cette fraction minoritaire 6, comprenant de 2 à 15% du débit volumique total des fumées épurées 5, est dirigée vers un brûleur 108 propre à élever la température de ce flux depuis la température de filtration, qui est comprise entre 120 et 230°C, de préférence entre 170 et 210°C, jusqu'à une température de régénération, qui est comprise entre 280 et 450°C, de préférence entre 300 et 350°C. Un combustible, pouvant être du gaz naturel, est introduit au brûleur 108 par la ligne L'.

Le flux 7 ainsi réchauffé, qui s'écoule dans la ligne 15, est ainsi propre à alimenter la gaine 205 en vue de la régénération périodique des différentes unités de dénitrification 105a à 105h.

A cet effet, lorsqu'on désire régénérer une de ces unités, il s'agit de fermer les registres 105₅ et 105₆, de manière à obturer l'entrée E'a et la sortie S'a. Dans le même temps, on ouvre les registres 105₇ et 105₈, de manière à rendre accessibles à la fois l'entrée E''a et la sortie S''a.

Il est à noter que, à un instant donné, il est envisageable qu'aucune unité ne se trouve dans la phase de régénération. Bien évidemment, il est également possible qu'une ou plusieurs, par exemple deux, unités soient soumises à cette régénération.

Si l'on désire régénérer le catalyseur 105₂ de l'unité 105a, on fait s'écouler le flux 7 par l'entrée E" a, selon la flèche pointillée F₅ à la figure 3. Ce flux chaud contribue alors, de façon connue en tant que telle, à cette régénération. Les produits de cette dernière, qui sont notamment des composés contenant du chlore et/ou du soufre, sont alors évacués avec les fumées par la sortie S" a, selon la flèche pointillée F₆, de manière à être admis dans la conduite 206.

Les fumées 8, auxquelles sont mélangés ces produits issus de la régénération, circulent alors dans la ligne 12, où elles se trouvent aspirées dans un ventilateur secondaire 109, qui est optionnel. Les fumées 9, issues de ce ventilateur, sont alors mélangées aux fumées originelles 1, provenant de l'incinérateur.

Il est important de remarquer que l'invention réalise un recyclage limité des fumées traitées par le biais des différents flux 6 à 9. Il est tout particulièrement à souligner que les fumées 8, chargées en composants formés lors de la régénération du catalyseur de dénitrification, se trouvent recyclées et, par conséquent, filtrées au niveau du module 104. Dans ces conditions, les composés relargués lors de la régénération se trouvent captés dans ce module de filtration, et ne sont donc pas rejetés à l'atmosphère.

Il y a également lieu de remarquer que, puisque le flux recyclé 6 ne constitue qu'une faible fraction du flux total 5, n'excédant pas 15% de ce dernier, l'accroissement de températures produit par le mélange des flux 1 et 9 se trouvent limité, à savoir qu'il n'excède pas environ 25°C. De la sorte, les filtres à manches 104₃ sont propres à conserver leur efficacité, en particulier à l'égard de polluants comme les métaux lourds ou les dioxines.

Ainsi, l'invention réalise un couplage, faisant intervenir des unités modulaires d'une installation de filtration sèche et de dénitrification catalytique de type SCR. Ceci permet de s'affranchir des contraintes liées aux nécessaires phases de régénération du catalyseur, puisque les composés issus de la régénération sont traités de manière intégrée par le dispositif de filtration et de dénitrification conforme à l'invention, sans interruption du fonctionnement de ce dernier.

L'invention est par ailleurs avantageuse, en ce qu'elle ne requiert aucun échangeur de chaleur, et en ce qu'elle autorise un agencement global intégré et modulaire. Enfin, il est à noter que, pendant les phases de régénération, tout risque de rejet gazeux, dont la toxicité serait intolérable, est évité puisque les composés issus de cette régénération sont retournés vers le module de filtration.

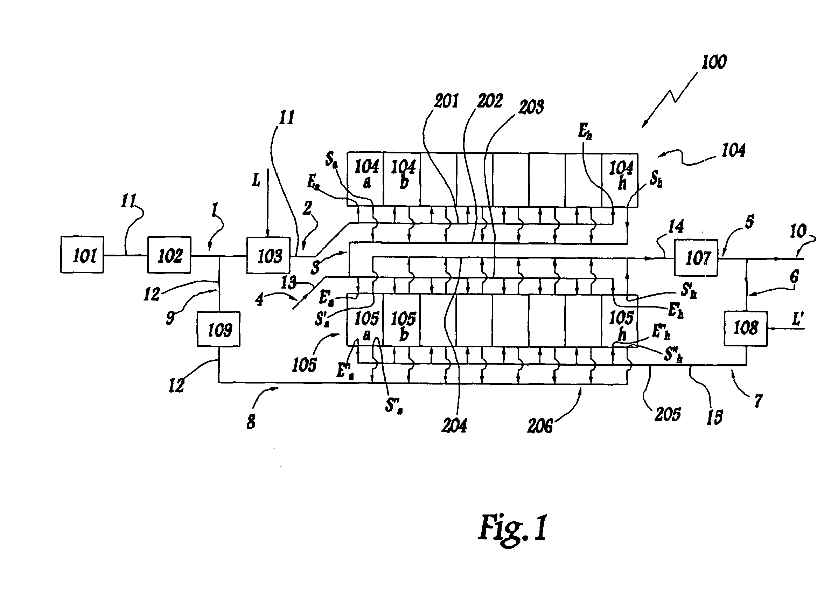

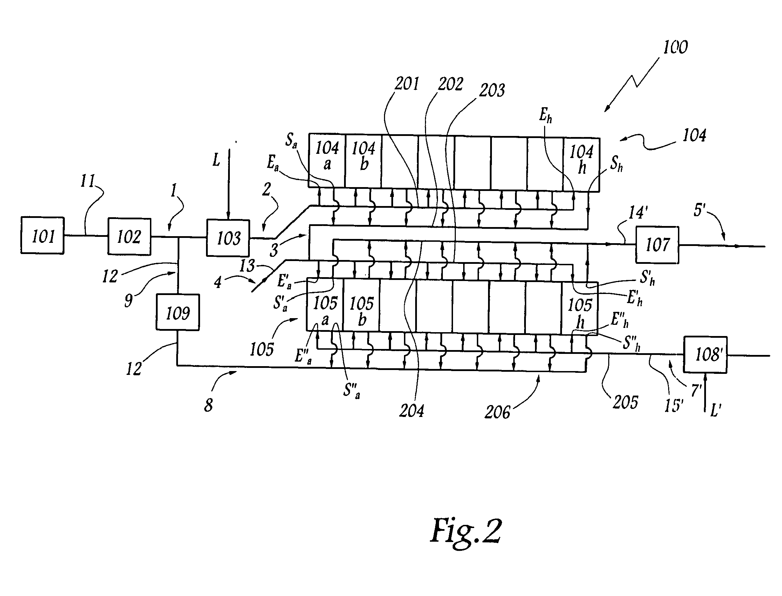

La figure 2, qui est une vue schématique analogue à la figure 1 décrite ci-dessus, illustre une variante de réalisation de l'invention. Sur cette figure 2, les flux et les éléments constructifs de l'installation, qui diffèrent de ceux de la figure 1, portent les mêmes numéros affectés de la référence « prime ».

La variante de la figure 2 diffère de celle illustrée à la figure 1, en ce que la totalité des fumées 5' est envoyée vers la cheminée, non représentée. Par ailleurs, un flux d'air 6', représentant 2 à 15 % du débit de 5', est envoyé vers un brûleur 108', qui élève la température de ce flux jusqu'à la température de régénération, comprise entre 280 et 450°C, de préférence entre 300 et 350°C. A cet effet, un combustible pouvant être du gaz naturel est introduit au brûleur 108, par l'intermédiaire de la ligne L'.

Le flux 7' ainsi réchauffé circule dans la ligne 15', de manière à alimenter la gaine 205 et assurer ainsi la régénération sélective des unités de dénitrification. Par ailleurs, le fonctionnement des autres éléments constructifs de l'installation de la figure 2 est identique à celui décrit en référence à la figure 1.

Dans les exemples décrits et représentés aux figures 1 à 3, les modules respectifs de filtration 104 et de dénitrification 105 sont disposées côte à côte. A titre d'alternative, il est également possible de les agencer bout à bout, à savoir que les unités de filtration et de dénitrification sont placées les unes derrière les autres. Il est également envisageable que le module de filtration comporte une unique unité de filtration.

Enfin, à titre de variante supplémentaire non représentée, on peut prévoir de placer un dispositif, de type connu en soi, permettant de faciliter la manutention et le levage des différents éléments constructifs, équipant les unités de filtration 104a à 104h, ainsi que de dénitrification 105a à 105h. Un tel dispositif, qui est par exemple un pont roulant, se trouve alors placé au-dessus des modules de filtration et de dénitrification.

### EXEMPLE

L'exemple suivant aide à mieux comprendre l'invention, en particulier en ce qui concerne l'influence du recyclage sur les températures des différents flux.

Les fumées 1 issues de l'incinérateur 101, possédant un débit total de 150 000 kg/h, sont alimentées en sortie de l'économiseur 102 à 180°C. Le flux 6, recyclé en aval du ventilateur 107, représente 6 % du flux total 5 des fumées épurées, soit 9 580 kg/h.

Ce flux 6 est réchauffé dans le brûleur 108, qui utilise environ 36 kg/h de gaz naturel, jusqu'à atteindre une température de 350°C. La température résultant du mélange des deux flux 1 et 9, à savoir immédiatement en amont du réacteur 103, est alors d'environ 191°C.

Ainsi, dans cet exemple, le fait de retourner le flux 9, à une température d'environ 350°C, conduit à une élévation globale de la température de filtration qui est seulement de 11°C. Ceci permet donc au module de filtration de continuer à opérer dans une zone de température pleinement satisfaisante.

## Revendications

1. Dispositif modulaire et intégré (100) de filtration et de dénitrification catalytique de fumées, comprenant un module de filtration (104) et un module de dénitrification catalytique (105), dans lequel
le module de filtration (104) comporte au moins une unité de filtration (104a-104h), dont chacune comprend une entrée (Ea-Eh) de fumées à épurer préalablement, des moyens de filtration, tels que des manches de filtration (104₃), ainsi qu'une sortie (Sa-Sh) des fumées préalablement épurées, ce module de filtration comportant également des moyens (201) d'amenée des fumées à épurer préalablement, débouchant dans la ou chaque entrée (Ea-Eh), des moyens (104₄) de mise en communication sélective entre ces moyens d'amenée et chaque entrée, des moyens (202) d'évacuation des fumées préalablement épurées, débouchant dans chaque sortie (Sa-Sh), ainsi que des moyens (104₅) de mise en communication sélective de chaque sortie avec ces moyens d'évacuation,
alors que le module de dénitrification (105) comprend plusieurs unités de dénitrification (105a-105h), dont chacune comprend une première entrée (E'a-E'h) de fumées à dénitrifier, des moyens de dénitrification catalytique (105₃), une première sortie (S'a-S'h) des fumées dénitrifiées, une seconde entrée (E"a-E"h) d'un flux de régénération des moyens de dénitrification catalytique, ainsi qu'une seconde sortie (S''a-S''h) d'évacuation des produits de la régénération, ce module de dénitrification comprenant également des moyens (203) d'amenée des fumées à dénitrifier, débouchant dans la ou chaque première entrée, qui sont mis en relation avec les moyens (202) d'évacuation des fumées préalablement épurées et comprenant une arrivée (13) d'un réactif de dénitrification, des moyens (105₅) de mise en communication sélective entre ces moyens d'amenée et chaque entrée, des moyens (204) d'évacuation des fumées dénitrifiées, débouchant dans chaque première sortie, des moyens (105₆) de mise en communication sélective de chaque première sortie avec ces moyens d'évacuation, des moyens (205) d'arrivée du flux de régénération, débouchant dans chaque seconde entrée, des moyens (105₇) de mise en communication sélective entre ces moyens d'arrivée et chaque seconde entrée, des moyens (206) d'évacuation des produits issus de la régénération, débouchant dans chaque seconde sortie, ainsi que des moyens (105₈) de mise en communication sélective de chaque seconde sortie avec ces moyens d'évacuation,
de sorte qu'il est possible de régénérer au moins une unité de dénitrification, en isolant celle-ci par rapport aux moyens (203) d'amenée des fumées à dénitrifier et aux moyens (204) d'évacuation des fumées dénitrifiées, tout en mettant cette au moins une unité en communication à la fois avec les moyens (205) d'arrivée du flux de régénération et avec les moyens (206) d'évacuation des produits issus de la régénération, alors que les autres unités sont propres à se trouver dans une phase de dénitrification, par mise en communication de ces autres unités à la fois avec les moyens (203) d'amenée des fumées à dénitrifier et avec les moyens (204) d'évacuation des fumées dénitrifiées, tout en isolant ces autres unités par rapport aux moyens (205) d'arrivée du flux de régénération et aux moyens (206) d'évacuation des produits issus de la régénération.

2. Dispositif selon la revendication 1, **caractérisé en ce qu**'il est prévu plusieurs unités de filtration (104a-104h), qui sont disposées les unes derrière les autres.

3. Dispositif selon la revendication 2, **caractérisé en ce que** les moyens (201) d'amenée des fumées à épurer préalablement et les moyens (202) d'évacuation des fumées préalablement épurées comprennent des première et seconde gaines (201, 202), s'étendant le long d'un côté des différentes unités de filtration.

4. Dispositif selon la revendication 2 ou 3, **caractérisé en ce que** les différentes unités de dénitrification (105a-105h) sont disposées les unes derrière les autres en regard desdites plusieurs unités de filtration (104a - 104h).

5. Dispositif selon la revendication 4, **caractérisé en ce que** les moyens (203) d'amenée des fumées à dénitrifier et les moyens (204) d'évacuation des fumées dénitrifiées comprennent des troisième et quatrième gaines (203, 204), s'étendant.sur un des côtés des différentes unités de dénitrification.

6. Dispositif selon l'une quelconque des revendications précédentes, **caractérisé en ce que** le module de filtration (104) et le module de dénitrification catalytique (105) sont disposés côte à côte.

7. Dispositif selon les revendications 3, 5 et 6, **caractérisé en ce que** les première (201), deuxième (202) troisième (203) et quatrième (204) gaines sont disposées les unes au-dessous des autres, dans un volume intercalaire (I) défini par le module de filtration (104) et le module de dénitrification (105) accolés.

8. Dispositif selon la revendication 7, **caractérisé en ce que**, de bas en haut, sont disposées respectivement la première gaine (201), la troisième gaine (203), la quatrième gaine (204) et la deuxième gaine (202).

9. Dispositif selon l'une quelconque des revendications 1 à 5, **caractérisé en ce que** le module de filtration et le module de dénitrification catalytique sont disposés bout à bout.

10. Dispositif selon l'une quelconque des revendications 5 à 9, **caractérisé en ce que** les moyens d'arrivée du flux de régénération et les moyens d'évacuation des produits issus de la régénération comprennent des cinquième (205) et sixième (206) gaines, s'étendant le long des unités de dénitrification, à l'opposé des troisième et quatrième gaines (203, 204).

11. Dispositif selon l'une quelconque des revendications 2 à 10, **caractérisé en ce que** le nombre d'unités de filtration (104a-104h) est compris entre 2 et 10, de préférence entre 4 et 8.

12. Dispositif selon l'une quelconque des revendications précédentes, **caractérisé en ce que** le nombre d'unités de dénitrification catalytique (105a-105h) est compris entre 2 et 12, de préférence entre 6 et 10.

13. Dispositif selon l'une quelconque des revendications précédentes, **caractérisé en ce que** chaque unité de dénitrification (105a-105h) est pourvue d'un dispositif (105₄) de ramonage des moyens (105₃) de dénitrification catalytique, ce dispositif étant situé au-dessus ou au-dessous de ces moyens de dénitrification, à une distance comprise entre 350 et 600 mm de ceux-ci.

14. Dispositif selon l'une quelconque des revendications précédentes, **caractérisé en ce que** chaque unité de filtration (104a-104h) et chaque unité de dénitrification catalytique (105a-105h) sont pourvues de trémies (104₂, 105₂) de collecte de solides, ainsi que de moyens d'évacuation des solides ainsi collectés.

15. Dispositif selon l'une quelconque des revendications précédentes, **caractérisé en ce qu'**il comprend également des moyens de manutention et de levage, qui sont placés au-dessus de ces unités.

16. Procédé de mise en oeuvre du dispositif conforme à l'une quelconque des revendications précédentes, comprenant les étapes suivantes :
- on alimente les moyens (201) d'amenée des fumées à épurer préalablement, au moyen de fumées dont la température est comprise entre 140°C et 250°C, de préférence entre 180°C et 230°C ;
- on épure préalablement ces fumées au sein de la ou de chaque unité de filtration (104a-104h) ;
- on mélange les fumées préalablement épurées à un réactif de dénitrification, choisi notamment dans la famille de l'ammoniac ou de ses solutions dans l'eau,
- on introduit les fumées à dénitrifier dans au moins certaines unités de dénitrification, tout en isolant ces unités par rapport aux moyens (205) d'arrivée du flux de régénération et aux moyens (206) d'évacuation des produits de la régénération ; et
- on régénère périodiquement au moins une autre unité de dénitrification, en y introduisant un flux de régénération dont la température est comprise entre 280 et 450°C, de préférence entre 300 et 350°C, tout en isolant cette au moins une autre unité par rapport aux moyens (203) d'amenée des fumées à dénitrifier et aux moyens (204) d'évacuation des fumées dénitrifiées.

17. Installation d'épuration de fumées, comprenant un dispositif modulaire et intégré de filtration et de dénitrification catalytique conforme à l'une quelconque des revendications 1 à 15, ainsi qu'une ligne (11) d'amenée des fumées à épurer, débouchant dans les moyens (201) d'amenée des fumées à épurer préalablement, une ligne (14) d'évacuation des fumées dénitrifiées, mise en communication avec les moyens (204) d'évacuation des fumées dénitrifiées, une ligne (15 ; 15') d'arrivée d'un flux de régénération (7 ; 7'), débouchant dans les moyens (205) d'arrivée du flux de régénération, ainsi qu'une ligne (12) d'évacuation des produits issus de la régénération, mise en communication à la fois avec les moyens (206) d'évacuation des produits issus de la régénération et avec la ligne (11) d'amenée des fumées à épurer.

18. Installation selon la revendication 17, **caractérisée en ce que** la ligne (15 ; 15') d'arrivée du flux de régénération est pourvue d'un brûleur (108 ; 108').

19. Installation selon la revendication 17 ou 18, **caractérisée en ce que** la ligne (15) d'arrivée du flux de régénération (7) est mise en communication avec la ligne (14) d'évacuation des fumées dénitrifiées.

20. Procédé de mise en oeuvre de l'installation conforme à l'une quelconque des revendications 17 à 19, dans lequel on alimente le flux de régénération (7 ; 7'), dans les moyens (205) d'arrivée de ce flux de régénération, selon un débit compris entre 2 et 15 % du débit total des fumées dénitrifiées (5 ; 5'), et dans lequel on recycle l'ensemble des produits issus de la régénération, en amont du dispositif modulaire et intégré (100) de filtration et de dénitrification catalytique.

21. Procédé selon la revendication 20, pour la mise en oeuvre de l'installation selon la revendication 19, **caractérisé en ce qu**'on prélève directement le flux de régénération (7) à partir des fumées dénitrifiées (5).

## Claims

1. A modular and integrated device (100) for the filtration and catalytic denitrification of flue gases, comprising a filtration module (104) and a catalytic denitrification module (105), in which
the filtration module (104) comprises at least one filtration unit (104a-104h), each of which comprises an inlet (Ea-Eh) for flue gases to be cleaned beforehand, filtration means, such as filtration sleeves (104₃), and also an outlet (Sa-Sh) for the flue gases cleaned beforehand, this filtration module also comprising means (201) for supplying the flue gases to be cleaned- beforehand, opening into the or each inlet (Ea-Eh), means (104₄) for selective communication between these supply means and each inlet, means (202) for evacuation of the flue gases cleaned beforehand, opening into each outlet (Sa-Sh), and also means (104₅) for selective communication of each outlet with these evacuation means,
whereas the denitrification module (105) comprises a plurality of denitrification units (105a-105h), each of which comprises a first inlet (E'a-E'h) for flue gases to be denitrified, catalytic denitrification means (105₃), a first outlet (S'a-S'h) for the denitrified flue gases, a second inlet (E"a-E"h) for a regeneration flow of the catalytic denitrification means, and also a second outlet (S"a-S"h) for evacuating the products of the regeneration, this denitrification module also comprising means (203) for supplying the flue gases to be denitrified, opening into the or each first inlet, which are connected to the means (202) for evacuating the flue gases cleaned beforehand and comprising an infeed (13) for a denitrification reagent, means (105₅) for selective communication between these supply means and each inlet, means (204) for evacuating the denitrified flue gases, opening into each first outlet, means (105₆) for selective communication of each first outlet with these evacuation means, infeed means (205) for the regeneration flow, opening into each second inlet, means (105₇) for selective communication between these infeed means and each second inlet, means (206) for evacuating the products resulting from the regeneration, opening into each second outlet, and also means (105₈) for selective communication of each second outlet with these evacuation means,
such that it is possible to regenerate at least one denitrification unit, by isolating it from the means (203) for supplying the flue gases to be denitrified and from the means (204) for evacuating the denitrified flue gases, while placing this at least one unit in communication both with the infeed means (205) for the regeneration flow and with the means (206) for evacuating the products resulting from the regeneration, whereas the other units are appropriate for being in a denitrification phase, by placing these other units in communication both with the means (203) for supplying the flue gases to be denitrified and with the means (204) for evacuating the denitrified flue gases, while isolating these other units from the infeed means (205) for the regeneration flow and from the means (206) for evacuating the products resulting from the regeneration.

2. A device according to Claim 1, **characterised in that** a plurality of filtration units (104a-104h) is provided, which units are arranged one behind another.

3. A device according to Claim 2, **characterised in that** the means (201) for supplying the flue gases to be cleaned beforehand and the means (202) for evacuating the flue gases cleaned beforehand comprise first and second casings (201, 202), extending along one side of the different filtration units.

4. A device according to Claim 2 or 3, **characterised in that** the different denitrification units (105a-105h) are arranged one behind another opposite said plurality of filtration units (104a-104h).

5. A device according to Claim 4, **characterised in that** the means (203) for supplying the flue gases to be denitrified and the means (204) for evacuating the denitrified flue gases comprise third and fourth casings (203, 204), extending over one of the sides of the different denitrification units.

6. A device according to any one of the preceding claims, **characterised in that** the filtration module (104) and the catalytic denitrification module (105) are arranged side by side.

7. A device according to Claims 3, 5 and 6, **characterised in that** the first (201), second (202), third (203) and fourth (204) casings are arranged one below another, in a separating volume (I) defined by the attached filtration module (104) and the denitrification module (105).

8. A device according to Claim 7, **characterised in that**, from bottom to top, there are arranged respectively: the first casing (201), the third casing (203), the fourth casing (204) and the second casing (202).

9. A device according to any one of Claims 1 to 5, **characterised in that** the filtration module and the catalytic denitrification module are arranged end to end.

10. A device according to any one of Claims 5 to 9, **characterised in that** the infeed means for the regeneration flow and the evacuation means for the products resulting from the regeneration comprise fifth (205) and sixth (206) casings, extending along the denitrification units, on the opposite side from the third and fourth casings (203, 204).

11. A device according to any one of Claims 2 to 10, **characterised in that** the number of filtration units (104a-104h) is between 2 and 10, preferably between 4 and 8.

12. A device according to any one of the preceding claims, **characterised in that** the number of catalytic denitrification units (105a-105h) is between 2 and 12, preferably between 6 and 10.

13. A device according to any one of the preceding claims, **characterised in that** each denitrification unit (105a-105h) is provided with a device (105₄) for sweeping the catalytic denitrification means (105₃), this device being located above or below these denitrification means, at a distance of between 350 and 600 mm therefrom.

14. A device according to any one of the preceding claims, **characterised in that** each filtration unit (104a-104h) and each catalytic denitrification unit (105a-105h) is provided with hoppers (104₂, 105₂) for collecting solids, and also with means for evacuating the solids thus collected.

15. A device according to any one of the preceding claims, **characterised in that** it also comprises handling and lifting means, which are placed above these units.

16. A process for implementing the device in accordance with any one of the preceding claims, comprising the following steps:
- the means (201) for supplying the flue gases to be cleaned beforehand are fed by means of flue gases of a temperature of between 140°C and 250°C, preferably between 180°C and 230°C;
- these flue gases are cleaned beforehand within the or each filtration unit (104a-104h);
- the flue gases cleaned beforehand are mixed with a denitrification reagent, selected in particular from the group consisting of ammonia or solutions thereof in water,
- the flue gases to be denitrified are introduced into at least certain denitrification units, while isolating these units from the infeed means (205) for the regeneration flow and from the means (206) for evacuating the products of the regeneration; and
- periodically at least one other denitrification unit is regenerated, by introducing therein a regeneration flow of a temperature of between 280 and 450°C, preferably between 300 and 350°C, while isolating this at least one other unit from the means (203) for supplying the flue gases to be denitrified and from the means (204) for evacuating the denitrified flue gases.

17. A flue gas cleaning installation, comprising a modular and integrated filtration and catalytic denitrification device in accordance with any one of Claims 1 to 15, and also a line (11) for supplying the flue gases to be cleaned, opening into the means (201) for supplying the flue gases to be cleaned beforehand, a line (14) for evacuating the denitrified flue gases, placed in communication with the means (204) for evacuating the denitrified flue gases, an infeed line (15; 15') for a regeneration flow (7; 7'), opening into the infeed means (205) for the regeneration flow, and also a line (12) for evacuating the products resulting from the regeneration, placed in communication both with the means (206) for evacuating the products resulting from the regeneration and with the infeed line (11) for the flue gases to be cleaned.

18. An installation according to Claim 17, **characterised in that** the infeed line (15; 15') for the regeneration flow is provided with a burner (108; 108').

19. An installation according to Claim 17 or 18, **characterised in that** the infeed line (15) for the regeneration flow (7) is placed in communication with the line (14) for evacuating the denitrified flue gases.

20. A process for implementing the installation in accordance with any one of Claims 17 to 19, in which the regeneration flow (7; 7'), in the infeed means (205) for this regeneration flow, is fed at a flow rate of between 2 and 15% of the total flow rate of the denitrified flue gases (5; 5'), and in which all of the products resulting from the regeneration are recycled upstream of the modular and integrated filtration and catalytic denitrification device (100).

21. A process according to Claim 20, for implementing the installation according to Claim 19, **characterised in that** the regeneration flow (7) is taken directly from the denitrified flue gases (5).

## Patentansprüche

1. Modulare und integrierte Vorrichtung (100) zum Filtrieren und katalytischen Entsticken von Rauchgasen, die ein Filtrationsmodul (104) und ein Modul (105) zum katalytischen Entsticken umfasst, bei der
das Filtrationsmodul (104) mindestens eine Filtrationseinheit (104a-104h) umfasst, wovon jede einen Einlass (Ea-Eh) für vorzureinigende Rauchgase, Filtrationsmittel wie etwa Filterschläuche (104₃) sowie einen Auslass (Sa-Sh) für vorgereinigte Rauchgase aufweist, wobei dieses Filtrationsmodul außerdem Mittel (201) zum Zuleiten der vorzureinigenden Rauchgase, die in den oder jeden Einlass (Ea-Eh) einmünden, Mittel (104₄) zum Herstellen einer wahlweisen Verbindung zwischen diesen Zuleitungsmittel und jedem Einlass, Mittel (202) zum Ableiten der vorgereinigten Rauchgase, die in jeden Auslass (Sa-Sh) einmünden, sowie Mittel (104₅) zum Herstellen einer wahlweisen Verbindung jedes Auslasses mit diesen Ableitungsmitteln umfasst, während das Entstickungsmodul (105) mehrere Entstickungseinheiten (105a-105h) umfasst, wovon jede einen ersten Einlass (E'a-E'h) für zu entstickende Rauchgase, Mittel zum katalytischen Entsticken (105₃), einen ersten Auslass (S'a-S'h) für entstickte Rauchgase, einen zweiten Einlass (E"a-E"h) für einen Strom zum Regenerieren der Mittel zum katalytischen Entsticken sowie einen zweiten Auslass (S"a-S"h) zum Ableiten der Produkte der Regeneration aufweist, wobei dieses Entstickungsmodul außerdem Mittel (203) zum Zuleiten der zu entstickenden Rauchgase, die in den oder jeden ersten Einlass einmünden und mit den Mitteln (202) zum Ableiten der vorgereinigten Rauchgase verbunden sind, und eine Zuführung (13) eines Entstickungsreagens, Mittel (105₅) zum Herstellen einer wahlweisen Verbindung zwischen diesen Zuleitungsmitteln und jedem Einlass, Mittel (204) zum Ableiten der entstickten Rauchgase, die in jeden ersten Auslass einmünden, Mittel (105₆) zum wahlweisen Verbinden jedes ersten Auslasses mit diesen Ableitungsmitteln, Mittel (205) zum Zuführen des Regenerationsstroms, die in jeden zweiten Einlass einmünden, Mittel (105₇) zum Herstellen einer wahlweisen Verbindung zwischen diesen Zuführungsmitteln und jedem der zweiten Einlässe, Mittel (206) zum Ableiten der von der Regeneration stammenden Produkte, die in jeden der zweiten Einlässe einmünden, sowie Mittel (105₈) zum wahlweisen Verbinden jedes der zweiten Auslässe mit diesen Ableitungsmitteln umfasst,
derart, dass es möglich ist, mindestens eine Entstickungseinheit zu regenerieren, indem diese Letztere von den Mitteln (203) zum Zuleiten der zu entstickenden Rauchgase und von den Mitteln (204) zum Ableiten der entstickten Rauchgase getrennt wird, wobei diese mindestens eine Einheit mit den Mitteln (205) zum Zuführen des Regenerationsstroms und zugleich mit den Mitteln (206) zum Ableiten der von der Regeneration stammenden Produkte verbunden ist, während sich die übrigen Einheiten in einer Entstickungsphase befinden können, und zwar durch Verbinden dieser übrigen Einheiten mit den Mitteln (203) zum Zuleiten der zu entstickenden Rauchgase und zugleich mit den Mitteln (204) zum Ableiten der entstickten Rauchgase, wobei diese übrigen Einheiten von den Mitteln (205) zum Zuführen des Regenerationsstroms und von den Mitteln (206) zum Ableiten der von der Regeneration stammenden Produkten getrennt sind.

2. Vorrichtung nach Anspruch 1, **dadurch gekennzeichnet, dass** mehrere Filtrationseinheiten (104a-104h) vorgesehen sind, die hintereinander angeordnet sind.

3. Vorrichtung nach Anspruch 2, **dadurch gekennzeichnet, dass** die Mittel (201) zum Zuleiten der vorzureinigenden Rauchgase und die Mittel (202) zum Ableiten der vorgereinigten Rauchgase einen ersten und zweiten Kanal (201, 202) aufweisen, die entlang einer Seite der verschiedenen Filtrationseinheiten verlaufen.

4. Vorrichtung nach Anspruch 2 oder 3, **dadurch gekennzeichnet, dass** die verschiedenen Entstickungseinheiten (105a-105h) den mehreren Filtrationseinheiten (104a-104h) gegenüberliegend hintereinander angeordnet sind.

5. Vorrichtung nach Anspruch 4, **dadurch gekennzeichnet, dass** die Mittel (203) zum Zuleiten der zu entstickenden Rauchgase und die Mittel (204) zum Ableiten der entstickten Rauchgase einen dritten und vierten Kanal (203, 204) aufweisen, die an einer der Seiten der verschiedenen Entstickungseinheiten verlaufen.

6. Vorrichtung nach einem der vorhergehenden Ansprüche, **dadurch gekennzeichnet, dass** das Filtrationsmodul (104) und das Modul zum katalytischen Entsticken (105) nebeneinander angeordnet sind.

7. Vorrichtung nach den Ansprüchen 3, 5 und 6, **dadurch gekennzeichnet, dass** der erste (201), zweite (202), dritte (203) und vierte (204) Kanal untereinander in einem Zwischenraum (I) angeordnet sind, der durch das Filtrationsmodul (104) und das Entstickungsmodul (105), die nebeneinandergesetzt sind, abgegrenzt ist.

8. Vorrichtung nach Anspruch 7, **dadurch gekennzeichnet, dass** von unten nach oben der erste Kanal (201), der dritte Kanal (203), der vierte Kanal (204) bzw. der zweite Kanal (202) angeordnet sind.

9. Vorrichtung nach einem der Ansprüche 1 bis 5, **dadurch gekennzeichnet, dass** das Filtrationsmodul und das Modul zum katalytischen Entsticken mit den Enden aneinander angeordnet sind.

10. Vorrichtung nach einem der Ansprüche 5 bis 9, **dadurch gekennzeichnet, dass** die Mittel zum Zuführen des Regenerationsstroms und die Mittel zum Ableiten der von der Regeneration stammenden Produkte einen fünften (205) und sechsten (206) Kanal aufweisen, die entlang den Entstickungseinheiten, gegenüber dem dritten und vierten Kanal (203, 204) verlaufen.

11. Vorrichtung nach einem der Ansprüche 2 bis 10, **dadurch gekennzeichnet, dass** die Anzahl der Filtrationseinheiten (104a-104h) im Bereich zwischen 2 und 10, vorzugsweise zwischen 4 und 8 ist.

12. Vorrichtung nach einem der vorhergehenden Ansprüche, **dadurch gekennzeichnet, dass** die Anzahl der Einheiten zum katalytischen Entsticken (105a-105h) im Bereich zwischen 2 und 12, vorzugsweise zwischen 6 und 10 ist.

13. Vorrichtung nach einem der vorhergehenden Ansprüche, **dadurch gekennzeichnet, dass** jede Entstickungseinheit (105a-105h) mit einer Vorrichtung (105₄) zum Rußblasen der Mittel (105₃) zum katalytischen Entsticken versehen ist, wobei sich diese Vorrichtung oberhalb oder unterhalb dieser Entstickungsmittel in einem Abstand im Bereich zwischen 350 und 600 mm von diesen befindet.

14. Vorrichtung nach einem der vorhergehenden Ansprüche, **dadurch gekennzeichnet, dass** jede Filtrationseinheit (104a-104h) und jede Einheit zum katalytischen Entsticken (105a-105h) mit Trichtern (104₂, 105₂) zum Sammeln von Feststoffen sowie mit Mitteln zum Ableiten der auf diese Weise gesammelten Feststoffe versehen ist.

15. Vorrichtung nach einem der vorhergehenden Ansprüche, **dadurch gekennzeichnet, dass** sie außerdem Transport- und Hubmittel umfasst, die oberhalb dieser Einheiten platziert sind.

16. Verfahren zur Anwendung der Vorrichtung nach einem der vorhergehenden Ansprüche, das die folgenden Schritte umfasst:
- Speisen der Mittel (201) zum Zuleiten der vorzureinigenden Rauchgase mit Rauchgasen, deren Temperatur im Bereich zwischen 140 °C und 250 °C, vorzugsweise zwischen 180 °C und 230 °C liegt:
- Vorreinigen dieser Rauchgase im Inneren der oder jeder Filtrationseinheit (104a-104h);
- Mischen der vorgereinigten Rauchgase mit einem Entstickungsreagens, das insbesondere aus der Ammoniakreihe oder ihrer Lösungen in Wasser gewählt ist:
- Einleiten der zu entstickenden Rauchgase in mindestens einige Entstickungseinheiten, wobei diese Einheiten von den Mitteln (205) zum Zuführen des Regenerationsstroms und von den Mitteln (206) zum Ableiten der Produkte der Regeneration getrennt sind; und
- periodisches Regenerieren mindestens einer weiteren Entstickungseinheit, wobei in diese ein Regenerationsstrom eingeleitet wird, dessen Temperatur im Bereich zwischen 280 und 450 °C, vorzugsweise zwischen 300 und 350 °C liegt, wobei diese mindestens eine weitere Einheit von den Mitteln (203) zum Zuleiten der zu entstickenden Rauchgase und von den Mitteln (204) zum Ableiten der entstickten Rauchgase getrennt ist.

17. Rauchgasentstickungsanlage, die Folgendes umfasst: eine modulare und integrierte Vorrichtung zum Filtrieren und katalytischen Entsticken nach einem der Ansprüche 1 bis 15 sowie eine Leitung (11) zum Zuleiten der zu reinigenden Rauchgase, die in die Mittel (201) zum Zuleiten der vorzureinigenden Rauchgase einmündet, eine Leitung (14) zum Ableiten der entstickten Rauchgase, die mit den Mitteln (204) zum Ableiten der entstickten Rauchgase verbunden ist, eine Leitung (15; 15') zum Zuführen eines Regenerationsstroms (7; 7'), die in die Mittel (205) zum Zuführen des Regenerationsstroms einmündet, sowie eine Leitung (12) zum Ableiten der von der Regeneration stammenden Produkte, die mit den Mitteln (206) zum Ableiten der von der Regeneration stammenden Produkte und zugleich mit der Leitung (11) zum Zuleiten der zu reinigenden Rauchgase verbunden ist.

18. Anlage nach Anspruch 17, **dadurch gekennzeichnet, dass** die Leitung (15; 15') zum Zuführen des Regenerationsstroms mit einem Brenner (108, 108') versehen ist.

19. Anlage nach Anspruch 17 oder 18, **dadurch gekennzeichnet, dass** die Leitung (15) zum Zuführen des Regenerationsstroms (7) mit der Leitung (14) zum Ableiten der entstickten Rauchgase verbunden ist.

20. Verfahren zur Anwendung der Anlage nach einem der Ansprüche 17 bis 19, bei dem der Regenerationsstrom (7, 7') in die Mittel (205) zum Zuführen dieses Regenerationsstroms gemäß einem Volumenstrom eingespeist wird, der im Bereich zwischen 2 und 15 % des Gesamtvolumenstroms der entstickten Rauchgase (5, 5') ist, und bei dem die Gesamtheit der von der Regeneration stammenden Produkte stromaufwärts von der modularen und integrierten Vorrichtung (100) zum Filtrieren und katalytischen Entsticken wieder eingespeist wird.

21. Verfahren nach Anspruch 20 für die Anwendung der Anlage nach Anspruch 19, **dadurch gekennzeichnet, dass** der Regenerationsstrom (7) direkt aus den entstickten Rauchgasen (5) entnommen wird.
